# EUROPEAN PATENT SPECIFICATION

(11) **EP 4 269 148 B1**
(45) Date of publication and mention of the grant of the patent: **16.07.2025**
(21) Application number: 22170294.7
(22) Date of filing: 27.04.2022
(51) Int. Cl.: B60K 11/02

(54) **A HEAT EXCHANGE SYSTEM AND A METHOD OF OPERATING THE SAME**
WÄRMETAUSCHERSYSTEM UND VERFAHREN ZUM BETREIBEN DESSELBEN
SYSTÈME D'ÉCHANGE DE CHALEUR ET SON PROCÉDÉ DE FONCTIONNEMENT

(43) Date of publication of application: 01.11.2023
(73) Proprietor: Thermo King LLC, Minneapolis, MN 55420 (US)
(72) Inventor: HOUDEK, Pavel, 28401 Kutna Hora (CZ); DOUDA, Jiri, 28541 Malesov (CZ)
(74) Representative: Haseltine Lake Kempner LLP

(56) References cited:
- DE-A1- 102021 101 214
- US-A1- 2021 339 621
- US-A1- 2022 055 502

## Description

The present invention relates to a heat exchange system for providing cooling by circulating a coolant, and a method of operating the heat exchange system.

The cooling capacity of heat exchange systems having heat rejecting heat exchangers, with a variable temperature of coolant exiting the heat rejecting heat exchanger, is dependent on the temperature of the coolant exiting the heat rejecting heat exchanger and limited by the flow rate which can be achieved including the hydraulic losses incurred in the heat rejecting heat exchangers.

US 2022/0055502 discloses a temperature control system for a vehicle, comprising a main circuit, and first and second sub-circuits connected in parallel for cooling or heating of components connected thereto. In the main circuit and in the sub-circuits there are respective pumps.

According to a first aspect, there is provided a heat exchange system for providing cooling by circulating a coolant, the heat exchange system comprising:
a supply circuit for circulating the coolant comprising:
   a coolant supply heat exchanger for rejecting heat from the coolant to provide a supply of chilled coolant;
   a supply pump for circulating the coolant in the coolant supply circuit;
a load circuit for circulating the coolant, comprising:
   a cooling load heat exchanger configured to transfer heat to the coolant;
   a load pump for circulating the coolant in the load circuit;
a mixing device which is configured to form part of each of the supply circuit and the load circuit; and
a valve arrangement configured to control a mix of (i) coolant from the supply circuit and (ii) recirculated coolant from the load circuit, in a coolant flow provided to the cooling load heat exchanger.

The load circuit or the supply circuit may comprise the valve arrangement. The expression "coolant from the supply circuit" is intended to refer to coolant provided to the mixing device from the coolant supply heat exchanger (i.e. without intervening circulation through the load circuit). The expression "recirculated coolant from the load circuit" is intended to refer to coolant provided from the cooling load heat exchanger without intervening circulation through the supply circuit.

The heat exchange system may be configured to operate with a supply recirculation condition in the mixing device, whereby at least a portion of coolant circulated by the supply pump follows a supply circuit recirculation loop extending through the mixing device. The heat exchange system may be configured to operate with a load recirculation condition in the mixing device, whereby at least a portion of coolant circulated by the load pump follows a load circuit recirculation loop extending through the mixing device.

It may be that the mixing device comprises: a supply circuit inlet for receiving chilled coolant from the supply circuit; a supply circuit outlet for providing coolant to the supply circuit for recirculation to the coolant supply heat exchanger; a load circuit inlet for receiving coolant from the load circuit; a load circuit outlet for providing coolant to the load circuit for heat transfer at the cooling load heat exchanger.

It may be that the heat exchange system is configured so that in use there is an equal flow rate of coolant through the supply circuit inlet and the supply circuit outlet (which may correspond to a minimum prevailing flow rate in the supply circuit). It may be that the heat exchange system is configured so that in use there is an equal flow rate of coolant through the load circuit inlet and the load circuit outlet (which may correspond to a minimum prevailing flow rate in the load circuit).

It may be that the mixing device is configured so that in use coolant drawn through the load circuit outlet preferentially originates from the supply circuit inlet, up to a flow rate of coolant flowing through the supply circuit inlet. It may be that the mixing device is configured so that in use coolant drawn through the supply circuit outlet preferentially originates from the load circuit inlet.

The mixing device may be configured so that in use coolant provided to the mixing device from the supply circuit inlet preferentially flows to the load circuit outlet, up to a flow rate of coolant through the load circuit outlet. The flow rate of coolant through the load circuit outlet may be defined as a minimum prevailing flow rate in the load circuit, Q₂. The expression "minimum prevailing flow rate" is used as it should be appreciated that parts of the load circuit away from the load circuit outlet may have a higher flow rate, Q_{L}, for example owing to an additional recirculating flow within a sub portion of the respective circuit.

The mixing device may be configured so that in use coolant provided to the mixing device from the load circuit inlet preferentially flows to the supply circuit outlet, up to a flow rate of coolant through the supply circuit outlet. The flow rate of coolant through the supply circuit outlet may be defined as a minimum prevailing flow rate in the supply circuit, Q₁.

It may be that the mixing device has a flow pathway between two opposing ends and is configured to permit flow in both directions along the flow pathway. It may be that a supply recirculation path from the supply circuit inlet to the supply circuit outlet is along a first direction along the flow pathway. It may be that a load recirculation path from the load circuit inlet to the load circuit outlet is along a second direction along the flow pathway. It may be that the supply recirculation path and the load recirculation flow path overlap along the flow pathway.

The heat exchange system may be configured to operate with a supply recirculation condition in the mixing device, whereby there is a net positive flow along the supply recirculation path in the mixing device. The heat exchange system may be configured to operate with a load recirculation condition in the mixing device, whereby there is a net positive flow along the load recirculation path in the mixing device.

It may be that the mixing device has a flow pathway between two opposing ends, wherein the supply circuit inlet and the load circuit outlet are relatively closer to a first end. It may be that the supply circuit outlet and the load circuit inlet are relatively closer to the opposing second end.

It may be that the mixing device has a bidirectional portion for flow of coolant in either direction, and wherein the mixing device is configured so that a flow rate and flow direction along the bidirectional portion corresponds to a difference between a minimum prevailing flow rate in the supply circuit and a minimum prevailing flow rate in the load circuit.

It may be that the mixing device is in the form of a tube.

It may be that the mixing device is generally elongate along the flow pathway. It may be that the inside diameter of the tube is at least 1.5 times larger than the largest diameter of the supply circuit inlet, the supply circuit outlet, the load circuit inlet and the load circuit outlet. It may be that the inside diameter of the tube is at least two times larger than the largest diameter of the supply circuit inlet, the supply circuit outlet, the load circuit inlet and the load circuit outlet, particularly when there are no space restrictions. This minimizes the pressure drop across the mixing device so that the supply circuit and the load circuit flow rates can be controlled independently of one another.

It may be that the load circuit comprises a bypass line for recirculation of coolant within the load circuit without passing through the mixing device.

It may be that the load circuit comprises a recirculation loop including the load pump, the cooling load heat exchanger and the bypass line, and excluding the mixing device.

It may be that the valve arrangement is configured to control the mix of coolant provided to the cooling load heat exchanger by controlling a split of flow received from the cooling load heat exchanger to (a) the bypass line and (b) the mixing device via a return line of the load circuit.

It may be that the heat exchange system is configured to operate in an high load flow condition in which a flow rate of the coolant flow provided to the cooling load heat exchanger is greater than a flow rate of coolant provided from the supply circuit to the mixing device, and in a low load flow condition in which the flow rate of the coolant flow provided to the cooling load heat exchanger is less than the flow rate of coolant provided from the supply circuit to the mixing device.

It may be that the valve arrangement is configured to operate in a partial bypass mode in which the coolant flow provided to the cooling load heat exchanger comprises a mix of (i) coolant from the supply circuit received via the mixing device and (ii) recirculated coolant from the load circuit via the bypass line. It may be that the valve arrangement is configured to operate in a full bypass mode in which the coolant flow provided to the cooling load heat exchanger consists of recirculated coolant from the load circuit. It may be that the valve arrangement is configured to operate in a full return mode in which the coolant flow provided to the cooling load heat exchanger consists of coolant received from the mixing device.

It may be that, in the partial bypass mode coolant flow provided to the cooling load heat exchanger comprises a mix of (i) coolant from the supply circuit received via the mixing device, (ii) recirculated coolant from the load circuit received via the bypass line and (iii) recirculated coolant from the load circuit received via the mixing device.

It may be that the heat exchanger is configured so that, when operating in the full return mode: there is a supply recirculation condition in the mixing device when a flow rate through the load pump is less than a flow rate of coolant provided to the mixing device from the supply circuit; and there is a load recirculation condition in the mixing device when a flow rate through the load pump is greater than a flow rate of coolant provided to the mixing device from the supply circuit.

It may be that the valve arrangement comprises a three-way valve configured to control a split of flow received from the cooling load heat exchanger to (i) the bypass line and (ii) the mixing device.

It may be that the heat exchange system comprises a controller configured to control the valve arrangement and/or the load pump to meet a cooling demand of the cooling load heat exchanger.

The controller may be configured to meet the cooling demand by controlling the valve arrangement and/or the load pump so that a monitored thermodynamic parameter associated with the load circuit or a heat source associated with the cooling load heat exchanger meets a primary target.

The primary target may be a value or range. The primary target may be a target temperature at a monitoring location associated with a heat source of the cooling load heat exchanger. The primary target may be a temperature (e.g. a set point temperature) of the heat source, for example a temperature of a component or a temperature-controlled environment or a process fluid to be cooled by the cooling load heat exchanger. The primary target may be a discharge temperature of the coolant flow through the cooling load heat exchanger (i.e. a temperature upon discharge of the coolant flow from the cooling load heat exchanger).

It may be that heat transfer at the cooling load heat exchanger is a function of a flow rate of the coolant flow provided to the cooling load heat exchanger and a temperature of the coolant flow provided to the cooling load heat exchanger. It may be that the controller is configured to control the valve arrangement and/or the load pump to meet a primary target associated with heat transfer at the cooling load heat exchanger meeting a cooling demand of the cooling load heat exchanger. It may be that the controller is configured to control the valve arrangement and/or the load pump to meet an auxiliary target associated with a property of the coolant flow provided to the heat exchanger. It may be that the controller is configured to control both the valve arrangement and the load pump to meet the primary target and the auxiliary target.

As the heat transfer at the cooling load heat exchanger is a function of a flow rate of the coolant flow provided to the cooling load heat exchanger and a temperature of the coolant flow provided to the cooling load heat exchanger, it may that there is a plurality of combinations of control settings for the load pump and the valve arrangement that would provide sufficient heat transfer to meet the cooling demand.

It may be that the controller comprises independent controllers for controlling the valve arrangement and the load pump respectively. For example, it may be that one of the controllers controls the load pump to meet the primary target, and the other of the controllers controls the valve arrangement to meet the auxiliary target.

It may be that the auxiliary target is defined to prevent excessive cooling at an upstream portion of the cooling load heat exchanger and/or excessive cooling of a component or portion of a component associated with an upstream portion of the cooling load heat exchanger.

It may be that the auxiliary target is a target temperature of the coolant flow provided to the cooling load heat exchanger.

The target temperature may be a minimum temperature, a temperature range between a minimum and maximum threshold, or a set-point. The temperature of the coolant flow provided to the cooling load heat exchanger is intended to refer to the temperature of the coolant flow at an inlet of the cooling load heat exchanger (i.e. as it is provided to the heat exchanger)

It may be that the heat exchange system comprises a cooling branch in the supply circuit in parallel and bypassing the mixing device, the cooling branch comprising a further cooling load heat exchanger.

It may be that the supply circuit is configured so that there is a branch point for providing flow into the cooling branch, wherein the branch point is upstream of the mixing device, and wherein there is a flow restriction device between the branch point and the mixing device configured so that a portion of flow circulating in the supply circuit flows through the cooling branch in preference to the mixing device.

It may be that the supply pump is a positive-displacement pump. It may be that the load pump is a positive-displacement pump.

According to a second aspect, there is provided a method of operating a heat exchange system in accordance with any preceding claim, comprising:
operating the supply pump to circulate coolant through the coolant supply heat exchanger and to provide coolant to the mixing device at a supply flow rate;
operating the load pump to circulate coolant through the cooling load heat exchanger at a cooling flow rate;
controlling the valve arrangement to vary a mix of (i) coolant from the supply circuit and (ii) recirculated coolant from the load circuit, in a coolant flow provided to the cooling load heat exchanger.

It may be that, in response to an increase in a cooling demand at the cooling load heat exchanger from a baseline operating state of the heat exchanger:
controlling the load pump to increase a flow rate of the coolant flow provided to the cooling load heat exchanger; and
controlling the valve arrangement to prevent a reduction of a temperature of the coolant flow provided to the cooling load heat exchanger.

It may be that the valve arrangement prevents a reduction of the temperature of the coolant flow provided to the cooling load heat exchanger by controlling a setting of the valve arrangement to maintain or reduce a proportion (i) coolant from the supply circuit in the mix of the coolant flow provided to the cooling load heat exchanger.

It may be that, in response to a decrease in a cooling demand at the cooling load heat exchanger from a baseline operating state of the heat exchanger:
controlling the load pump to reduce a flow rate of the coolant flow provided to the cooling load heat exchanger; and
controlling the valve arrangement to prevent a reduction of a temperature of the coolant flow provided to the cooling load heat exchanger

It may be that in the baseline operating state, the temperature of the coolant flow provided to the cooling load heat exchanger corresponds to a target or limit temperature to prevent excessive cooling at an upstream portion of the cooling load heat exchanger and/or excessive cooling of a component or portion of a component associated with an upstream portion of the cooling load heat exchanger. Accordingly, it may be that the control of the valve arrangement to prevent a reduction of the temperature of the coolant flow is to prevent the variation of the flow rate through the cooling load heat exchanger from causing the temperature to fall below the target or limit temperature.

It may be that the method comprises selectively controlling the valve arrangement to operate in: a partial bypass mode in which the coolant flow provided to the cooling load heat exchanger comprises a mix of (i) coolant from the supply circuit received via the mixing device and (ii) recirculated coolant from the load circuit via the bypass line.

It may be that the method comprises controlling the valve arrangement in the partial bypass mode to vary a split of flow received from the cooling load heat exchanger to (a) the bypass line and (b) the mixing device via the return line, to vary a proportion of coolant from the supply circuit in the coolant flow provided to the cooling load heat exchanger.

It may be that the method further comprises selectively controlling the valve arrangement to operate in:
a full return mode in which the coolant flow provided to the cooling load heat exchanger consists of coolant received from the mixing device; and/or
a full bypass mode in which the coolant flow provided to the cooling load heat exchanger consists of recirculated coolant from the load circuit.

It may be that the method comprises: operating the heat exchange system so that there is a supply recirculation condition in the mixing device, whereby at least a portion of coolant circulated by the supply pump follows a supply circuit recirculation loop extending through the mixing device. It may be that the method comprises operating the heat exchange system so that there is a load recirculation condition in the mixing device, whereby at least a portion of coolant circulated by the load pump follows a load circulation recirculation loop extending through the mixing device.

Embodiments will now be described, by way of example only, with reference to the accompanying Figures, in which:
**Figure** 1 schematically shows a first example heat exchange system;
**Figure** 2 schematically shows a second example heat exchange system; and
**Figure** 3 is a flow chart showing steps of a method of operating the second example heat exchange system.

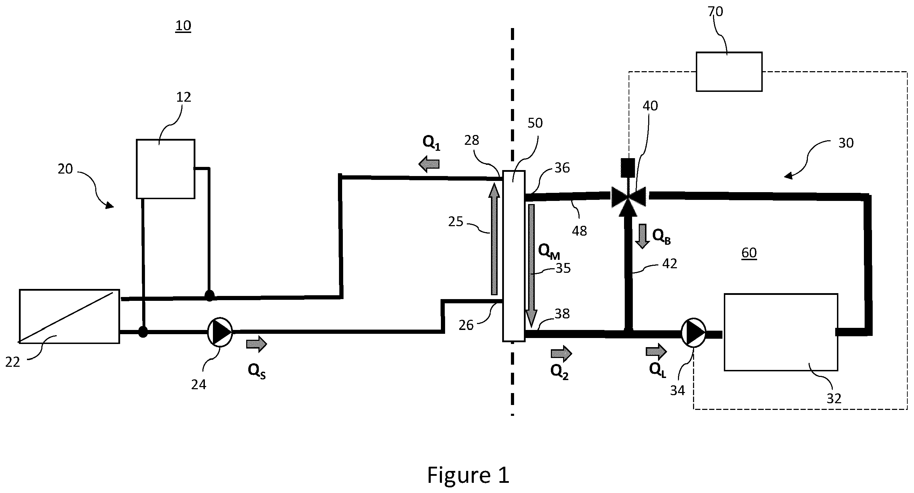

**Figure** 1 shows a heat exchange system 10 for providing cooling to a load such as a car battery, by circulating coolant. The heat exchange system 10 comprises a supply circuit 20 for circulating the coolant, and a load circuit 30 for circulating the coolant. The heat exchange system 10 further comprises a mixing device 50 which is configured to form part of each of the supply circuit 20 and the load circuit 30. In other words, the supply circuit 20 and the load circuit 30 are joined by the mixing device 50.

The supply circuit 20 comprises a coolant supply heat exchanger 22 for rejecting heat from the coolant. Therefore, the output of the coolant supply heat exchanger 22 is configured to provide a supply of chilled coolant. The coolant supply heat exchanger 22 may be, for example, an evaporator of a refrigeration circuit.

The supply circuit 20 further comprises a supply pump 24 for circulating the coolant in the supply circuit 20. The supply circuit 20 also comprises an expansion tank 12 which has fluidic connections respectively upstream and downstream of the coolant supply heat exchanger 22, so that the expansion tank 12 is arranged in parallel with the coolant supply heat exchanger 22. One of the fluidic connections of the expansion tank 12 is disposed between the supply pump 24 and the coolant supply heat exchanger 22. The expansion tank 12 is configured to accommodate variable expansion due to temperature changes of the coolant in the supply circuit 20, and to bleed air from the system 10.

In this example, the mixing device 50 comprises a supply circuit inlet 26 for receiving chilled coolant from the supply circuit 20, and a supply circuit outlet 28 for providing coolant to the supply circuit 20 for recirculation to the coolant supply heat exchanger 22. The expression "coolant from the supply circuit" is intended to refer to coolant provided to the mixing device 50 from the coolant supply heat exchanger 22 (i.e., without intervening circulation through the load circuit 30). The flow rate of coolant through the supply circuit outlet 28 is defined as a minimum prevailing flow rate in the supply circuit, Q₁. The flow rate of coolant through the supply circuit outlet 28 is the same as the flow rate of coolant through the supply circuit inlet 26.

The load circuit 30 comprises a cooling load heat exchanger 32 configured to transfer heat to the coolant from a heat source (or load) which requires cooling, and a load pump 34 for circulating the coolant in the load circuit 30.

The load circuit 30 further comprises a valve arrangement 40 which is configured to control a mix of coolant from the supply circuit 20 and recirculated coolant from the load circuit 30, in the coolant flow provided to the cooling load heat exchanger 32.

In this example, the mixing device 50 comprises a load circuit inlet 36 for receiving coolant from the load circuit 30, and a load circuit outlet 38 for providing coolant to the load circuit 30 for heat transfer at the cooling load heat exchanger 32. The expression "coolant from the load circuit" or "recirculated coolant from the load circuit" is intended to refer to coolant provided from the cooling load heat exchanger 32 without intervening circulation through the supply circuit 20. The flow rate of coolant through the load circuit outlet 38 is defined as the minimum prevailing flow rate in the load circuit 30, Q₂. The flow rate of coolant through the load circuit inlet 36 is the same as the flow rate of coolant through the load circuit outlet 38, Q₂.

In this example, the mixing device 50 has a flow pathway between two opposing ends and is configured to permit flow in both directions along the flow pathway. In this example, the supply circuit inlet 26 and the load circuit outlet 38 are relatively closer to a first end of the mixing device 50, and the supply circuit outlet 28 and the load circuit inlet 36 are relatively closer to a second end of the mixing device 50, opposing the first end. In other examples, the inlets and outlets may be at any suitable locations on the mixing device.

In this example, a supply recirculation path 25 from the supply circuit inlet 26 to the supply circuit outlet 28 is along a first direction along the flow pathway. A load recirculation path 35 from the load circuit inlet 36 to the load circuit outlet 38 is along a second direction along the flow pathway, opposing the first direction. In this example, the supply recirculation path 25 and the load recirculation path 35 overlap along the flow pathway. This ensures that coolant drawn through the load circuit outlet 38 preferentially originates from the supply circuit inlet 26, up to a flow rate of coolant flowing through the supply circuit inlet 26, and coolant drawn through the supply circuit outlet 28 preferentially originates from the load circuit inlet 36, up to a flow rate of coolant flowing through the load circuit inlet 36. In other words, it ensures that coolant provided to the mixing device 50 from the supply circuit inlet 26 preferentially flows to the load circuit outlet 38, and coolant provided to the mixing device 50 from the load circuit inlet 36 preferentially flows to the supply circuit outlet 28.

In some examples, the mixing device may have any suitable configuration so that in use, coolant drawn through the load circuit outlet preferentially originates from the supply circuit inlet, up to a flow rate of coolant flowing through the supply circuit inlet and coolant drawn through the supply circuit outlet preferentially originates from the load circuit inlet. In other examples, the mixing device may have any suitable configuration which does not have this preferential flow arrangement.

In this example, the mixing device 50 is in the form of a tube. In other examples, the mixing device may be any suitable shape, such as a tank or accumulator. In some examples, the mixing device may be generally elongate along the flow pathway. In the form of a tube, the mixing device is relatively small and lightweight, and allows for rapid temperature change responses of the coolant delivered to the cooling load heat exchanger 32 when the valve arrangement 40 modifies the mix of coolant to the cooling load heat exchanger 32.

The mixing device 50 in the form of a tube has a low pressure drop between inlets 26, 36, and outlets 28, 38, which ensures that flow changes to the load circuit 30 will not affect flow in the supply circuit 20 and vice versa, thereby ensuring that the flow rates in the supply circuit 20 and the load circuit 30 can be independently controlled. In this example, the inside diameter of the tube of the mixing device 50 is at least 1.5 times larger than the largest inside diameter of the inlets 26, 36 and outlets 28, 38 of the mixing device 50. In other examples, the inside diameter of the tube of the mixing device 50 is at least two times larger than the largest inside diameter of the inlets 26, 36 and outlets 28, 38 of the mixing device 50. This ensures that the pressure drop across the mixing device 50 is low in comparison to the pressure drop in the supply circuit 20 and the load circuit 30.

In this example, the load circuit 30 further comprises a bypass line 42 for recirculating coolant within the load circuit 30 without passing through the mixing device 50. Therefore, in this example, the load circuit 30 comprises a bypass recirculation loop 60 including the load pump 34, the cooling load heat exchanger 32 and the bypass line 42, and excluding the mixing device 50. Parts of the load circuit 30 away from the load circuit outlet 38, such as in the bypass recirculation loop 60, may have a higher flow rate, Q_{L}, than the minimum prevailing flow rate, Q₂.

In this example, the valve arrangement 40 comprises a three-way valve 40 configured to control a split of flow received from the cooling load heat exchanger 32 to the bypass line 42 and to the mixing device 50 via a return line 48. In other examples, there may be any suitable valve arrangement configured to control the mix of coolant provided to the cooling load heat exchanger 32, for example, by controlling a split of flow received from the cooling load heat exchanger 32 to the bypass line 42 and to the mixing device 50 via the return line 48 of the load circuit 30.

In this example, the three-way valve 40 is disposed in the load circuit 30 upstream of the mixing device 50. In some examples, the three-way valve may be disposed downstream of the mixing device 50, and upstream of the load pump 34 (i.e., between the mixing device 50 and the load pump 34). In other examples, the three-way valve, or any suitable valve arrangement, may be disposed in the supply circuit 20 and may be configured to control a mix of coolant from the supply circuit and recirculated coolant from the load circuit, in a coolant flow provided to the cooling load heat exchanger.

The heat exchange system 10 further comprises a controller 70 which, in this example is configured to control the valve arrangement 40 and the load pump 34 to meet a cooling demand of the cooling load heat exchanger 32. In other examples, there may be multiple controllers which control the valve arrangement 40 and the load pump 34. In further examples, only one of the valve arrangement 40 and load pump 34 may be controlled.

In use, a load which is being cooled by the heat exchange system 10 may need to be cooled to a target temperature. The supply pump 24 is configured to pump coolant through the supply circuit 20, and the load pump 34 is configured to pump coolant through the load circuit 30. The load rejects heat to the cooling load heat exchanger 32, thereby heating the coolant, and the heated coolant is recirculated, with some chilled coolant being introduced from the supply circuit 20 via the mixing device 50, to chill the heated coolant.

In this example, in use, the heat exchange system 10 is configured to operate with a supply recirculation condition 25 in the mixing device 50, whereby at least a portion of coolant circulated by the supply pump 24 follows a supply circuit 20 recirculation loop extending through the mixing device 50 and whereby there is a net positive flow along the supply recirculation path 25 in the mixing device 50. The heat exchange system 10 in this example is also configured to operate with a load recirculation condition in the mixing device 50, whereby at least a portion of coolant circulated by the load pump 34 follows a load circuit recirculation loop extending through the mixing device 50, and whereby there is a net positive flow along the load recirculation path 35 in the mixing device 50.

In this example, the valve arrangement 40 is configured to operate in one of three different modes: a partial bypass mode, a full bypass mode and a full return mode. In the partial bypass mode, the coolant flow provided to the cooling load heat exchanger 32 comprises a mix of coolant from the supply circuit 20 received via the mixing device 50, recirculated coolant from the load circuit 30 received via the mixing device 50, and recirculated coolant from the load circuit 30 via the bypass line 42. In the full bypass mode, the coolant flow provided to the cooling load heat exchanger 32 consists solely of recirculated coolant from the load circuit 30, via the bypass line 42. In the full return mode, the coolant flow provided to the cooling load heat exchanger 32 consists solely of coolant received from the mixing device 50, including coolant from the supply circuit 20 and recirculated coolant from the load circuit 30 through the mixing device 50, such that there is no flow through the bypass line 42.

In the full return mode, there is a supply recirculation condition 25 in the mixing device 50 when the flow rate of coolant through the load pump, Q_{L} = Q₂, is less than the flow rate of coolant provided to the mixing device 50 from the supply circuit 20, Q₁ (i.e., when Q₂ < Q₁). In the full return mode, there is a load recirculation condition 35 in the mixing device 50 when the flow rate of coolant through the load pump, Q_{L} = Q₂, is greater than the flow rate of coolant provided to the mixing device 50 from the supply circuit 20, Q₁ (i.e., Q₂ > Q₁). This difference in flow rate is enabled by the mixing device 50.

The mixing device 50 therefore has a bidirectional portion for flow of coolant in either direction, and the flow rate and net flow direction, Q_{M}, along the bidirectional portion corresponds to a difference between the minimum prevailing flow rate in the supply circuit 20, Q₁, and the minimum prevailing flow rate in the load circuit 30, Q₂, (i.e., Q_{M} = Q₂ - Q₁).

When the flow rate of the coolant provided to the cooling load heat exchanger 32, Q_{L}, is higher than the flow rate of coolant provided from the supply circuit 20 to the supply circuit inlet 26, the heat exchange system 10 may be configured to operate in a high load flow condition. When the flow rate of the coolant provided to the cooling load heat exchanger 32, Q_{L}, is lower than the flow rate of coolant provided from the supply circuit 20 to the supply circuit inlet 26, the heat exchange system 10 may be configured to operate in a low load flow condition.

Due to the mixing device 50 and valve arrangement 40, the flow rate of coolant through the cooling load heat exchanger 32, Q_{L}, can be controlled independently of the flow rate of coolant through the coolant supply heat exchanger 22, Q_{S} = Q₁. This minimises the effects of hydraulic resistance from the coolant supply heat exchanger 22 on the cooling capacity of the cooling load heat exchanger 32, such that higher flow rates through the cooling load heat exchanger 32, Q_{L}, can be achieved.

Being able to independently control the coolant flow rate in the cooling load heat exchanger 32, Q_{L}, is particularly advantageous when the temperature of the chilled coolant provided to the mixing device 50 at the supply circuit inlet 26 is variable. Heat transfer at the cooling load heat exchanger 32 is a function of a flow rate of the coolant flow provided to the cooling load heat exchanger 32, Q_{L}, and a temperature of the coolant flow provided to the cooling load heat exchanger 32. When the coolant is too cold, a part of the load which rejects heat to an inlet of the cooling load heat exchanger 32 will reject more heat (and therefore be colder) than a part of the load which rejects heat to an outlet of the cooling load heat exchanger 32. If the whole load must be cooled to the target temperature, then the part of the load at the inlet of the cooling load heat exchanger 32 will be much colder than the target temperature which can be damaging to a load, such as a car battery. Being able to increase the flow rate of coolant through the cooling load heat exchanger 32 independently, means that the temperature difference across the load can be reduced (so that more even cooling is achieved across the load). By increasing the flow through inlet of the cooling load exchanger 32 and decreasing the inlet flow temperature the difference between the coolant temperature at the inlet and outlet of the cooling load heat exchanger 32 is reduced, whilst preserving total cooling capacity is still preserved.

In this example, the controller 70 is configured meet the cooling demand of the cooling load heat exchanger 32 by controlling the valve arrangement 40 and the load pump 34 so that a monitored thermodynamic parameter associated with the load circuit 30 or a heat source (load) associated with the cooling load heat exchanger 32 meets a primary target associated with heat transfer at the cooling load heat exchanger 32. The primary target may be a value or a range. It may be a temperature at a monitoring location associated with a heat source (load) of the cooling load heat exchanger 32. The primary target may be a temperature (e.g., a set point temperature) of the heat source, for example a temperature of a component or a temperature-controlled environment or a process fluid to be cooled by the cooling load heat exchanger 32. The primary target may be a discharge temperature of the coolant flow through the cooling load heat exchanger 32 (i.e., a temperature upon discharge of the coolant flow from the cooling load heat exchanger 32). For example, the heat exchange system may comprise a sensor, such as a temperature or pressure sensor, for sensing a thermodynamic property of the coolant at the outlet of the cooling load heat exchanger 32 or a thermodynamic property of the load, and the sensor may output a reading to the controller 70, which then controls the valve arrangement 40 and the load pump 34 to meet the primary target.

In this example, the controller 70 is also configured to meet an auxiliary target associated with a property of the coolant flow provided to the cooling load heat exchanger. For example, the auxiliary target may be a target temperature of the coolant flow provided to the cooling load heat exchanger 32. For example, the heat exchange system may comprise a sensor, such as a temperature or pressure sensor, for sensing a thermodynamic property of the coolant at the inlet of the cooling load heat exchanger 32 or a thermodynamic property of the load at the inlet of the cooling load heat exchanger 32, and the sensor may output a reading to the controller 70, which then controls the valve arrangement 40 and the load pump 34 to also meet the auxiliary target.

The auxiliary target may be defined to prevent excessive cooling at the inlet or an upstream portion of the cooling load heat exchanger 32. It may be defined to prevent excessive cooling of a component or portion of a component associated with an upstream portion of the cooling load heat exchanger 32. The target temperature may be a minimum temperature, a set-point temperature or a set range between a maximum threshold and minimum threshold.

As the heat transfer at the cooling load heat exchanger 32 is a function of a flow rate of the coolant flow provided to the cooling load heat exchanger 32, Q_{L}, and a temperature of the coolant flow provided to the cooling load heat exchanger 32, there may be a plurality of combinations of control settings for the load pump 34 and the valve arrangement 40 that would provide sufficient heat transfer to meet the cooling demand. This may be achieved with a single controller 70 or a more than one controller. For example, with more than one controller, one of the controllers may control the load pump 34 to meet the primary target, and the other of the controllers may control the valve arrangement 40 to meet the auxiliary target.

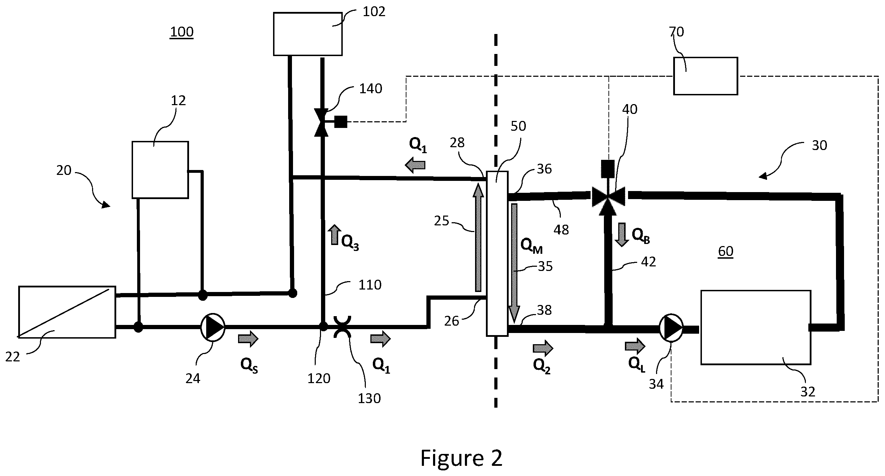

**Figure** 2 shows a second example heat exchange system 100 which is substantially similar to the first example heat exchange system 10 with like reference numerals denoting like parts. The second example heat exchange system 100 differs from the first example heat exchange system 10 in that it comprises a cooling branch 110 in the supply circuit 20 which branches from the line between the supply pump 24 and the supply circuit inlet 26 of the mixing device 50 at a branch point 120 (i.e., the branch point 120 is upstream of the mixing device 50), and returns to a line in the supply circuit 20 between the coolant supply heat exchanger 22 and the supply circuit outlet 28 of the mixing device 50 (i.e., downstream of the mixing device 50). The cooling branch 110 is therefore in parallel with, and bypassing, the mixing device 50. In this example, the cooling load heat exchanger 32 in the load circuit 30 is a first cooling load heat exchanger 32, and the cooling branch 110 comprises a second cooling load heat exchanger 102, in the supply circuit 20.

In this example, there is a flow restriction device 130 between the branch point 120 and the mixing device 50 (i.e., between the branch point 120 and the supply circuit inlet 26) configured so that a portion of the flow circulating in the supply circuit 20 flows through the cooling branch 110 and the rest to the mixing device 50. A second valve arrangement 140 is configured to control flow through the cooling branch 110, and is controlled by the controller 70.

Due to the separation of the supply circuit 20 and the load circuit 30, as well as the mixing device 50 and the valve arrangements 40, 140, the flow rate of coolant through the first cooling load heat exchanger 32, Q_{L}, can be controlled independently of the flow rate of coolant through the second cooling load heat exchanger 102, Q₃, so that each load or heat source can be cooled independently, as required. The supply circuit 20 may also comprise sensors at the second cooling load heat exchanger 102 similar to the sensors at the first cooling load heat exchanger 32.

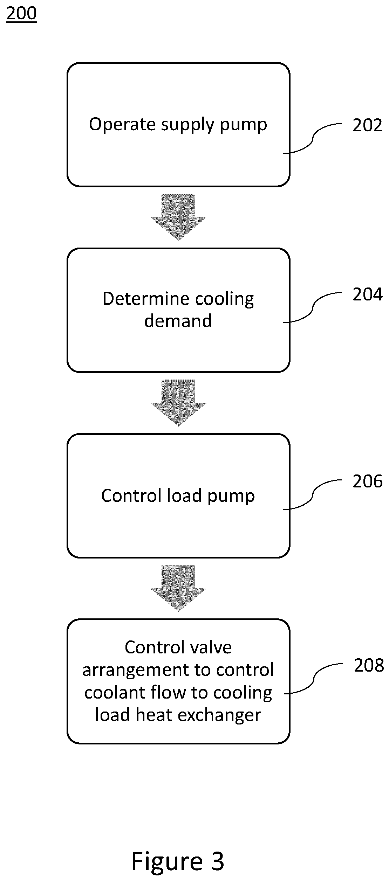

**Figure 3** is a flow chart showing steps of a method 200 of controlling a heat exchange system, such as the first example heat exchange system 10 or the second example heat exchange system 100.

In block 202, the method 200 comprises operating the supply pump 24 to circulate coolant through the coolant supply heat exchanger 22 and to provide coolant to the mixing device 50 at a supply flow rate, Q_{S} which may be equal to Q₁.

In block 204, the method 200 comprises determining a cooling demand at the cooling load heat exchanger 32, 102. The cooling demand may be from a baseline operating state of the respective cooling load heat exchanger 32, 102. The baseline operating state may be the temperature of the coolant flow provided to the cooling load heat exchanger 32 corresponding to a target or limit temperature to prevent excessive cooling at an upstream portion of the cooling load heat exchanger 32 and/or excessive cooling of a component or portion of a component associated with an upstream portion of the cooling load heat exchanger 32.

Determining a cooling demand at the cooling load heat exchanger may comprise, for example, determining a thermodynamic property associated with the heat source (load) heat source which is cooled by the cooling load heat exchanger, such as the temperature of the heat source or the temperature of the coolant at an outlet of the cooling load heat exchanger 32, 102.

In block 206, the method 200 comprises operating the load pump 34 to circulate coolant through the cooling load heat exchanger 32 at a cooling flow rate, Q_{L}.

In block 208, the method 200 comprises controlling the valve arrangement 40 to vary the mix of cooling from the supply circuit 20 and recirculated coolant from the load circuit 30, in a coolant flow provided to the cooling load heat exchanger 32.

When the cooling load heat exchanger 32 is already at a baseline operating state (e.g., the coolant provided at the inlet of the cooling load heat exchanger 32 is already at a minimum or limit temperature), the valve arrangement 40 can be controlled to ensure that the temperature of the coolant does not reduce further, when the flow rate through the cooling load heat exchanger 32 is changed. Accordingly, the control of the valve arrangement 40 may be configured to prevent a reduction of the temperature of the coolant flow is to prevent the variation of the flow rate through the cooling load heat exchanger 32 from causing the temperature to fall below the target or limit temperature.

In this example, the valve arrangement 40 can be controlled to operate selectively in the partial bypass mode, the full bypass mode and/or the full return mode. In the partial bypass mode, the method 200 may comprise controlling the valve arrangement 40 to vary a split of flow received from the cooling load heat exchanger 32 to the bypass line 42 and the mixing device 50 via the return line 48, to vary a proportion of coolant from the supply circuit 20 in the coolant flow provided to the cooling load heat exchanger 32.

The method 200 may also comprise operating the heat exchange system 10, 100 by controlling the valve arrangement 40 and the load pump 34 so that there is a supply recirculation condition in the mixing device 50 or operating the heat exchange system 10, 100 by controlling the valve arrangement 40 and the load pump 34 so that there is a load recirculation condition in the mixing device 50.

In an example in which the valve arrangement 40 is operating in a partial bypass mode, such that the heat exchange system 10, 100 is operated in a supply recirculation condition, the proportion of flow through the bypass line 42 and the return line 48 affects the temperature of the coolant supplied to the cooling load heat exchanger 32, without affecting the flow rate of the flow to the cooling load heat exchanger 32, Q_{L}. When the valve arrangement 40 is operating in a partial bypass mode, such that the heat exchange system 10, 100 is operated in a load recirculation condition, varying the proportion of flow through the bypass line 42 and the return line 48 has no effect on the temperature of the coolant provided to the cooling load heat exchanger 32.

In this example, blocks 206 and 208 are based on the determined cooling demand. For example, in response to an increase in cooling demand at the cooling load heat exchanger 32 from a baseline operating state of the heat exchanger, the method 200 may comprise controlling the load pump 34 to increase a flow rate of the coolant flow provided to the cooling load heat exchanger, and may control the valve arrangement 40 to prevent a reduction of a temperature of the coolant flow provided to the cooling load heat exchanger 32. In response to a decrease in cooling demand at the cooling load heat exchanger 32 from a baseline operating state of the heat exchanger, the method 200 may comprise controlling the load pump 34 to reduce a flow rate of the coolant flow provided to the cooling load heat exchanger, and may control the valve arrangement 40 to prevent a reduction of a temperature of the coolant flow provided to the cooling load heat exchanger 32. In other examples, the control may be based on any suitable condition.

The method 200 may prevent a reduction of the temperature of the coolant flow provided to the cooling load heat exchanger by controlling a setting of the valve arrangement 40 to maintain or reduce a proportion of coolant from the supply circuit in the mix of the coolant flow provided to the cooling load heat exchanger.

## Claims

1. A heat exchange system (10) for providing cooling by circulating a coolant, the heat exchange system comprising:
a supply circuit (20) for circulating the coolant comprising:
a coolant supply heat exchanger (22) for rejecting heat from the coolant to provide a supply of chilled coolant;
a supply pump (24) for circulating the coolant in the coolant supply circuit;
a load circuit (30) for circulating the coolant, comprising:
a cooling load heat exchanger (32) configured to transfer heat to the coolant;
a load pump (34) for circulating the coolant in the load circuit;
a mixing device (50) which is configured to form part of each of the supply circuit and the load circuit; and **characterized by**
a valve arrangement (40) configured to control a mix of (i) coolant from the supply circuit and (ii) recirculated coolant from the load circuit, in a coolant flow provided to the cooling load heat exchanger.

2. A heat exchange system according to claim 1, wherein the mixing device comprises:
a supply circuit inlet (26) for receiving chilled coolant from the supply circuit;
a supply circuit outlet (28) for providing coolant to the supply circuit for recirculation to the coolant supply heat exchanger;
a load circuit inlet (36) for receiving coolant from the load circuit;
a load circuit outlet (38) for providing coolant to the load circuit for heat transfer at the cooling load heat exchanger.

3. A heat exchange system according to claim 2, wherein the mixing device is configured so that in use coolant drawn through the load circuit outlet preferentially originates from the supply circuit inlet, up to a flow rate of coolant flowing through the supply circuit inlet; and/or
wherein the mixing device is configured so that in use coolant drawn through the supply circuit outlet preferentially originates from the load circuit inlet.

4. A heat exchange system according to any of claims 2-3, wherein the mixing device has a flow pathway between two opposing ends and is configured to permit flow in both directions along the flow pathway;
wherein a supply recirculation path (25) from the supply circuit inlet to the supply circuit outlet is along a first direction along the flow pathway; and
wherein a load recirculation path (35) from the load circuit inlet to the load circuit outlet is along a second direction along the flow pathway;
and wherein the supply recirculation path and the load recirculation flow path overlap along the flow pathway; and/or
wherein the mixing device has a flow pathway between two opposing ends, wherein the supply circuit inlet and the load circuit outlet are relatively closer to a first end, and wherein the supply circuit outlet and the load circuit inlet are relatively closer to the opposing second end.

5. A heat exchange system according to any preceding claim, wherein the mixing device is in the form of a tube.

6. A heat exchange system according to any preceding claim, wherein the load circuit comprises a bypass line (42) for recirculation of coolant within the load circuit without passing through the mixing device.

7. A heat exchange system according to claim 6, wherein the valve arrangement is configured to control the mix of coolant provided to the cooling load heat exchanger by controlling a split of flow received from the cooling load heat exchanger to (a) the bypass line and (b) the mixing device via a return line (48) of the load circuit and/or
wherein the valve arrangement is configured to:
operate in a partial bypass mode in which the coolant flow provided to the cooling load heat exchanger comprises a mix of (i) coolant from the supply circuit received via the mixing device and (ii) recirculated coolant from the load circuit via the bypass line;
operate in a full bypass mode in which the coolant flow provided to the cooling load heat exchanger consists of recirculated coolant from the load circuit; and/or
operate in a full return mode in which the coolant flow provided to the cooling load heat exchanger consists of coolant received from the mixing device.

8. A heat exchange system according to any of claims 6-7, wherein the valve arrangement comprises a three-way valve configured to control a split of flow received from the cooling load heat exchanger to (i) the bypass line and (ii) the mixing device.

9. A heat exchange system according to any preceding claim, comprising a controller (70) configured to control the valve arrangement and/or the load pump to meet a cooling demand of the cooling load heat exchanger.

10. A heat exchange system according to claim 9, wherein heat transfer at the cooling load heat exchanger is a function of a flow rate of the coolant flow provided to the cooling load heat exchanger and a temperature of the coolant flow provided to the cooling load heat exchanger;
wherein the controller is configured to control the valve arrangement and/or the load pump to meet a primary target associated with heat transfer at the cooling load heat exchanger meeting a cooling demand of the cooling load heat exchanger;
wherein the controller is configured to control the valve arrangement and/or the load pump to meet an auxiliary target associated with a property of the coolant flow provided to the heat exchanger;
wherein the controller is configured to control both the valve arrangement and the load pump to meet the primary target and the auxiliary target, and optionally
wherein the auxiliary target is a target temperature of the coolant flow provided to the cooling load heat exchanger.

11. A heat exchange system according to any preceding claim, comprising a cooling branch (110) in the supply circuit in parallel and bypassing the mixing device, the cooling branch comprising a further cooling load heat exchanger (102), and optionally
wherein the supply circuit is configured so that there is a branch point (120) for providing flow into the cooling branch, wherein the branch point is upstream of the mixing device, and wherein there is a flow restriction device between the branch point and the mixing device configured so that a portion of flow circulating in the supply circuit flows through the cooling branch in preference to the mixing device.

12. A method of operating a heat exchange system in accordance with any preceding claim, comprising:
operating the supply pump to circulate coolant through the coolant supply heat exchanger and to provide coolant to the mixing device at a supply flow rate;
operating the load pump to circulate coolant through the cooling load heat exchanger at a cooling flow rate;
controlling the valve arrangement to vary a mix of (i) coolant from the supply circuit and (ii) recirculated coolant from the load circuit, in a coolant flow provided to the cooling load heat exchanger.

13. A method according to claim 12 comprising, in response to an increase in a cooling demand at the cooling load heat exchanger from a baseline operating state of the heat exchanger:
controlling the load pump to increase a flow rate of the coolant flow provided to the cooling load heat exchanger; and
controlling the valve arrangement to prevent a reduction of a temperature of the coolant flow provided to the cooling load heat exchanger and/or
the method comprising, in response to a decrease in a cooling demand at the cooling load heat exchanger from a baseline operating state of the heat exchanger:
controlling the load pump to reduce a flow rate of the coolant flow provided to the cooling load heat exchanger; and
controlling the valve arrangement to prevent a reduction of a temperature of the coolant flow provided to the cooling load heat exchanger.

14. A method according to any of claims 12-13, wherein the heat exchange system is in accordance with any of claims 6-7, comprising selectively controlling the valve arrangement to operate in:
a partial bypass mode in which the coolant flow provided to the cooling load heat exchanger comprises a mix of (i) coolant from the supply circuit received via the mixing device and (ii) recirculated coolant from the load circuit via the bypass line.

15. A method according to claim 14, wherein the heat exchange system is in accordance with claim 7, comprising controlling the valve arrangement in the partial bypass mode to vary a split of flow received from the cooling load heat exchanger to (a) the bypass line and (b) the mixing device via the return line, to vary a proportion of coolant from the supply circuit in the coolant flow provided to the cooling load heat exchanger and/or
further comprising selectively controlling the valve arrangement to operate in:
a full return mode in which the coolant flow provided to the cooling load heat exchanger consists of coolant received from the mixing device; and/or
a full bypass mode in which the coolant flow provided to the cooling load heat exchanger consists of recirculated coolant from the load circuit.

## Patentansprüche

1. Wärmeaustauschsystem (10) zum Bereitstellen einer Kühlung durch Zirkulieren eines Kühlmittels, wobei das Wärmeaustauschsystem Folgendes umfasst:
einen Zufuhrkreis (20) zum Zirkulieren des Kühlmittels, der Folgendes umfasst:
einen Kühlmittelzufuhrwärmetauscher (22) zum Ableiten von Wärme aus dem Kühlmittel, um eine Zufuhr von gekühltem Kühlmittel bereitzustellen;
eine Zufuhrpumpe (24) zum Zirkulieren des Kühlmittels in dem Kühlmittelzufuhrkreis;
einen Lastkreis (30) zum Zirkulieren des Kühlmittels, der Folgendes umfasst:
einen Kühllastwärmetauscher (32), der dazu ausgelegt ist, Wärme auf das Kühlmittel zu übertragen;
eine Lastpumpe (34) zum Zirkulieren des Kühlmittels in dem Lastkreis;
eine Mischvorrichtung (50), die dazu ausgelegt ist, einen Teil sowohl des Zufuhrkreises als auch des Lastkreises zu bilden; und **gekennzeichnet durch**
eine Ventilanordnung (40), die dazu ausgelegt ist, ein Gemisch aus (i) Kühlmittel aus dem Zufuhrkreis und (ii) rezirkuliertem Kühlmittel aus dem Lastkreis in einem dem Kühllastwärmetauscher bereitgestellten Kühlmittelstrom zu steuern.

2. Wärmeaustauschsystem nach Anspruch 1, wobei die Mischvorrichtung Folgendes umfasst:
einen Zufuhrkreiseinlass (26) zum Aufnehmen von gekühltem Kühlmittel aus dem Zufuhrkreis;
einen Zufuhrkreisauslass (28) zum Bereitstellen von Kühlmittel zu dem Zufuhrkreis zur Rezirkulation zu dem Kühlmittelzufuhrwärmetauscher;
einen Lastkreiseinlass (36) zum Aufnehmen von Kühlmittel aus dem Lastkreis;
einen Lastkreisauslass (38) zum Bereitstellen von Kühlmittel zu dem Lastkreis zur Wärmeübertragung an dem Kühllastwärmetauscher.

3. Wärmeaustauschsystem nach Anspruch 2, wobei die Mischvorrichtung so ausgelegt ist, dass, bis zu einer Strömungsrate des Kühlmittels, das durch den Zufuhrkreiseinlass strömt, im Gebrauch durch den Lastkreisauslass angesaugtes Kühlmittel vorzugsweise aus dem Zufuhrkreiseinlass stammt; und/oder
wobei die Mischvorrichtung so ausgelegt ist, dass im Gebrauch durch den Zufuhrkreisauslass angesaugtes Kühlmittel vorzugsweise aus dem Lastkreiseinlass stammt.

4. Wärmeaustauschsystem nach einem der Ansprüche 2-3, wobei die Mischvorrichtung einen Strömungspfad zwischen zwei gegenüberliegenden Enden aufweist und dazu ausgelegt ist, eine Strömung in beiden Richtungen entlang des Strömungspfads zu ermöglichen;
wobei sich ein Zufuhrrezirkulationspfad (25) von dem Zufuhrkreiseinlass zu dem Zufuhrkreisauslass entlang einer ersten Richtung entlang des Strömungspfads befindet; und
wobei sich ein Lastrezirkulationspfad (35) von dem Lastkreiseinlass zu dem Lastkreisauslass entlang einer zweiten Richtung entlang des Strömungspfads befindet;
und wobei sich der Zufuhrrezirkulationspfad und der Lastrezirkulationspfad entlang des Strömungspfads überlappen; und/oder
wobei die Mischvorrichtung einen Strömungspfad zwischen zwei gegenüberliegenden Enden aufweist, wobei sich der Zufuhrkreiseinlass und der Lastkreisauslass relativ näher an einem ersten Ende befinden, und wobei sich der Zufuhrkreisauslass und der Lastkreiseinlass relativ näher an dem gegenüberliegenden zweiten Ende befinden.

5. Wärmeaustauschsystem nach einem der vorhergehenden Ansprüche, wobei die Mischvorrichtung in Form eines Rohrs vorliegt.

6. Wärmeaustauschsystem nach einem der vorhergehenden Ansprüche, wobei der Lastkreis eine Umgehungsleitung (42) zur Rezirkulation von Kühlmittel innerhalb des Lastkreises ohne Durchlaufen der Mischvorrichtung umfasst.

7. Wärmeaustauschsystem nach Anspruch 6, wobei die Ventilanordnung dazu ausgelegt ist, das dem Kühllastwärmetauscher bereitgestellte Gemisch von Kühlmittel durch Steuern einer Teilung einer vom Kühllastwärmetauscher empfangenen Strömung zu (a) der Umgehungsleitung und (b) der Mischvorrichtung über eine Rückführungsleitung (48) des Lastkreises zu steuern, und/oder
wobei die Ventilanordnung zu Folgendem ausgelegt ist:
Arbeiten in einem Teilumgehungsmodus, in dem der dem Kühllastwärmetauscher bereitgestellte Kühlmittelstrom ein Gemisch aus (i) Kühlmittel aus dem Zufuhrkreis, das über die Mischvorrichtung empfangen wird, und (ii) rezirkuliertem Kühlmittel aus dem Lastkreis über die Umgehungsleitung umfasst;
Arbeiten in einem Vollumgehungsmodus, in dem der dem Kühllastwärmetauscher bereitgestellte Kühlmittelstrom aus rezirkuliertem Kühlmittel aus dem Lastkreis besteht; und/oder
Arbeiten in einem Vollrückführungsmodus, in dem der dem Kühllastwärmetauscher bereitgestellte Kühlmittelstrom aus Kühlmittel besteht, das von der Mischvorrichtung empfangen wird.

8. Wärmeaustauschsystem nach einem der Ansprüche 6-7, wobei die Ventilanordnung ein Dreiwegeventil umfasst, das dazu ausgelegt ist, eine Teilung eines vom Kühllastwärmetauscher empfangene Strömung zu (i) der Umgehungsleitung und (ii) der Mischvorrichtung zu steuern.

9. Wärmeaustauschsystem nach einem der vorhergehenden Ansprüche, umfassend eine Steuerung (70), die dazu ausgelegt ist, die Ventilanordnung und/oder die Lastpumpe zu steuern, um einen Kühlbedarf des Kühllastwärmetauschers zu erfüllen.

10. Wärmeaustauschsystem nach Anspruch 9, wobei die Wärmeübertragung an dem Kühllastwärmetauscher eine Funktion einer Strömungsrate des dem Kühllastwärmetauscher bereitgestellten Kühlmittelstroms und einer Temperatur des dem Kühllastwärmetauscher bereitgestellten Kühlmittelstroms ist;
wobei die Steuerung dazu ausgelegt ist, die Ventilanordnung und/oder die Lastpumpe so zu steuern, dass ein Primärziel erfüllt wird, das damit assoziiert ist, dass eine Wärmeübertragung an dem Kühllastwärmetauscher einen Kühlbedarf des Kühllastwärmetauschers erfüllt;
wobei die Steuerung dazu ausgelegt ist, die Ventilanordnung und/oder die Lastpumpe so zu steuern, dass ein Hilfsziel erfüllt wird, das mit einer Eigenschaft des dem Wärmetauscher bereitgestellten Kühlmittelstroms assoziiert ist;
wobei die Steuerung dazu ausgelegt ist, sowohl die Ventilanordnung als auch die Lastpumpe so zu steuern, dass das Primärziel und das Hilfsziel erfüllt werden, und optional
wobei das Hilfsziel eine Zieltemperatur des dem Kühllastwärmetauscher bereitgestellten Kühlmittelstroms ist.

11. Wärmeaustauschsystem nach einem der vorhergehenden Ansprüche, umfassend einen Kühlzweig (110) in dem Zufuhrkreis parallel zu der Mischvorrichtung und diese umgehend, wobei der Kühlzweig einen weiteren Kühllastwärmetauscher (102) umfasst, und optional
wobei der Zufuhrkreis so ausgelegt ist, dass ein Abzweigpunkt (120) zum Bereitstellen einer Strömung in den Kühlzweig vorhanden ist, wobei sich der Abzweigpunkt stromaufwärts der Mischvorrichtung befindet, und wobei eine Strömungsbegrenzungsvorrichtung zwischen dem Abzweigpunkt und der Mischvorrichtung vorhanden ist, die so ausgelegt ist, dass ein Teil einer in dem Zufuhrkreis zirkulierenden Strömung durch den Kühlzweig vorzugsweise zu der Mischvorrichtung strömt.

12. Verfahren zum Betreiben eines Wärmeaustauschsystems nach einem der vorhergehenden Ansprüche, das Folgendes umfasst:
Betreiben der Zufuhrpumpe, um Kühlmittel durch den Kühlmittelzufuhrwärmetauscher zu zirkulieren und Kühlmittel mit einer Zufuhrströmungsrate zu der Mischvorrichtung bereitzustellen;
Betreiben der Lastpumpe, um Kühlmittel durch den Kühllastwärmetauscher mit einer Kühlströmungsrate zu zirkulieren;
Steuern der Ventilanordnung, um eine Gemisch aus (i) Kühlmittel aus dem Zufuhrkreis und (ii) rezirkuliertem Kühlmittel aus dem Lastkreis in einem dem Kühllastwärmetauscher bereitgestellten Kühlmittelstrom zu variieren.

13. Verfahren nach Anspruch 12, das als Reaktion auf eine Erhöhung eines Kühlbedarfs an dem Kühllastwärmetauscher von einem Basisbetriebszustand des Wärmetauschers Folgendes umfasst:
Steuern der Lastpumpe, um eine Strömungsrate des dem Kühllastwärmetauscher bereitgestellten Kühlmittelstroms zu erhöhen; und
Steuern der Ventilanordnung, um eine Reduzierung einer Temperatur des dem Kühllastwärmetauscher bereitgestellten Kühlmittelstroms zu verhindern, und/oder
wobei das Verfahren als Reaktion auf eine Verringerung eines Kühlbedarfs an dem Kühllastwärmetauscher von einem Basisbetriebszustand des Wärmetauschers Folgendes umfasst:
Steuern der Lastpumpe, um eine Strömungsrate des dem Kühllastwärmetauscher bereitgestellten Kühlmittelstroms zu reduzieren; und
Steuern der Ventilanordnung, um eine Reduzierung einer Temperatur des dem Kühllastwärmetauscher bereitgestellten Kühlmittelstroms zu verhindern.

14. Verfahren nach einem der Ansprüche 12-13, wobei das Wärmeaustauschsystem gemäß einem der Ansprüche 6-7 ist, umfassend selektives Steuern der Ventilanordnung, so dass sie in Folgendem arbeitet:
einem Teilumgehungsmodus, in dem der dem Kühllastwärmetauscher bereitgestellte Kühlmittelstrom ein Gemisch aus (i) Kühlmittel aus dem Zufuhrkreis, das über die Mischvorrichtung empfangen wird, und (ii) rezirkuliertem Kühlmittel aus dem Lastkreis über die Umgehungsleitung umfasst.

15. Verfahren nach Anspruch 14, wobei das Wärmeaustauschsystem gemäß Anspruch 7 ist, umfassend Steuern der Ventilanordnung in dem Teilumgehungsmodus, um eine Teilung einer vom Kühllastwärmetauscher empfangenen Strömung zu (a) der Umgehungsleitung und (b) der Mischvorrichtung über die Rückführungsleitung zu variieren, um einen Anteil an Kühlmittel aus dem Zufuhrkreis in dem dem Kühllastwärmetauscher bereitgestellten Kühlmittelstrom zu variieren, und/oder ferner umfassend selektives Steuern der Ventilanordnung, so dass sie in Folgendem arbeitet:
einem Vollrückführungsmodus, in dem der dem Kühllastwärmetauscher bereitgestellte Kühlmittelstrom aus Kühlmittel besteht, das von der Mischvorrichtung empfangen wird; und/oder
einem Vollumgehungsmodus, in dem der dem Kühllastwärmetauscher bereitgestellte Kühlmittelstrom aus rezirkuliertem Kühlmittel aus dem Lastkreis besteht.

## Revendications

1. Système d'échange de chaleur (10) destiné à fournir un refroidissement par la mise en circulation d'un réfrigérant, le système d'échange de chaleur comprenant :
un circuit **d'alimentation** (20) pour faire circuler le réfrigérant, comprenant :
un échangeur de chaleur **d'alimentation** en réfrigérant (22) pour rejeter la chaleur du réfrigérant pour fournir une alimentation en réfrigérant refroidi ;
une pompe **d'alimentation** (24) pour faire circuler le réfrigérant dans le circuit d'alimentation en réfrigérant ;
un circuit de charge (30) pour faire circuler le réfrigérant, comprenant :
un échangeur de chaleur de charge de refroidissement (32) conçu pour transférer de la chaleur au réfrigérant ;
une pompe de charge (34) pour faire circuler le réfrigérant dans le circuit de charge ;
un dispositif de mélange (50) qui est conçu pour former une partie de chacun du circuit **d'alimentation** et du circuit de charge ; et **caractérisé par**
un agencement de vanne (40) conçu pour commander un mélange de (i) réfrigérant provenant du circuit d'alimentation et (ii) réfrigérant remis en circulation à partir du circuit de charge, dans un flux de réfrigérant fourni à l'échangeur de chaleur de charge de refroidissement.

2. Système d'échange de chaleur selon la revendication 1, dans lequel le dispositif de mélange comprend :
une entrée de circuit d'alimentation (26) pour recevoir le réfrigérant refroidi depuis le circuit d'alimentation ;
une sortie de circuit **d'alimentation** (28) pour fournir le réfrigérant au circuit d'alimentation pour une remise en circulation vers l'échangeur de chaleur d'alimentation en réfrigérant ;
une entrée de circuit de charge (36) pour recevoir le réfrigérant depuis le circuit de charge ;
une sortie de circuit de charge (38) pour fournir le réfrigérant au circuit de charge pour un transfert de chaleur au niveau de l'échangeur de chaleur de charge de refroidissement.

3. Système d'échange de chaleur selon la revendication 2, dans lequel le dispositif de mélange est conçu de telle sorte que, en utilisation, le réfrigérant aspiré à travers la sortie de circuit de charge provient de préférence de l'entrée de circuit d'alimentation, jusqu'à un débit de réfrigérant circulant à travers l'entrée de circuit d'alimentation ; et/ou
dans lequel le dispositif de mélange est conçu de telle sorte que, en utilisation, le réfrigérant aspiré à travers la sortie de circuit de charge provient de préférence de l'entrée de circuit de charge.

4. Système d'échange de chaleur selon l'une quelconque des revendications 2 et 3, dans lequel le dispositif de mélange possède une voie d'écoulement entre deux extrémités opposées et est conçu pour permettre l'écoulement dans les deux sens le long de la voie d'écoulement ;
dans lequel un trajet de remise en circulation d'alimentation (25) entre l'entrée de circuit d'alimentation et la sortie de circuit d'alimentation correspond à une première direction le long de la voie d'écoulement ; et
dans lequel un trajet de remise en circulation de charge (35) entre l'entrée de circuit de charge et la sortie de circuit de charge correspond à une seconde direction le long de la voie d'écoulement ;
et dans lequel le trajet de remise en circulation d'alimentation et le trajet de remise en circulation de charge se chevauchent le long de la voie d'écoulement ; et/ou
dans lequel le dispositif de mélange possède une voie d'écoulement entre deux extrémités opposées, dans lequel l'entrée de circuit d'alimentation et la sortie de circuit de charge sont relativement plus proches d'une première extrémité, et dans lequel la sortie de circuit **d'alimentation** et l'entrée de circuit de charge sont relativement plus proches de la seconde extrémité opposée.

5. Système d'échange de chaleur selon l'une quelconque des revendications précédentes, dans lequel le dispositif de mélange est en forme de tube.

6. Système d'échange de chaleur selon l'une quelconque des revendications précédentes, dans lequel le circuit de charge comprend une conduite de dérivation (42) pour la remise en circulation de réfrigérant à l'intérieur du circuit de charge sans passer par le dispositif de mélange.

7. Système d'échange de chaleur selon la revendication 6, dans lequel l'agencement de vanne est conçu pour commander le mélange de réfrigérant fourni à l'échangeur de chaleur de charge de refroidissement en commandant une division du flux reçu depuis l'échangeur de chaleur de charge de refroidissement vers (a) la conduite de dérivation et (b) le dispositif de mélange par le biais d'une conduite de retour (48) du circuit de charge, et/ou
dans lequel l'agencement de vanne est configuré pour :
fonctionner dans un mode de dérivation partielle dans lequel le flux de réfrigérant fourni à l'échangeur de chaleur de charge de refroidissement comprend un mélange de (i) réfrigérant provenant du circuit d'alimentation reçu par le biais du dispositif de mélange et (ii) réfrigérant remis en circulation depuis le circuit de charge par le biais de la conduite de dérivation ;
fonctionner dans un mode de dérivation totale dans lequel le flux de réfrigérant fourni à l'échangeur de chaleur de charge de refroidissement consiste en réfrigérant remis en circulation depuis le circuit de charge ; et/ou fonctionner dans un mode de retour total dans lequel le flux de réfrigérant fourni à l'échangeur de chaleur de charge de refroidissement consiste en réfrigérant reçu depuis le dispositif de mélange.

8. Système d'échange de chaleur selon l'une quelconque des revendications 6 et 7, dans lequel l'agencement de vanne comprend une vanne à trois voies conçue pour commander une division du flux reçu depuis l'échangeur de chaleur de charge de refroidissement vers (i) la conduite de dérivation et (ii) le dispositif de mélange.

9. Système d'échange de chaleur selon l'une quelconque des revendications précédentes, comprenant un dispositif de commande (70) configuré pour commander l'agencement de vanne et/ou la pompe de charge pour satisfaire une demande de refroidissement de l'échangeur de chaleur de charge de refroidissement.

10. Système d'échange de chaleur selon la revendication 9, dans lequel un transfert de chaleur au niveau de l'échangeur de chaleur de charge de refroidissement est une fonction d'un débit du flux de réfrigérant fourni à l'échangeur de chaleur de charge de refroidissement et d'une température du flux de réfrigérant fourni à l'échangeur de chaleur de charge de refroidissement ;
dans lequel le dispositif de commande est configuré pour commander l'agencement de vanne et/ou la pompe de charge pour satisfaire une cible principale associée au transfert de chaleur au niveau de l'échangeur de chaleur de charge de refroidissement satisfaisant une demande de refroidissement de l'échangeur de chaleur de charge de refroidissement ;
dans lequel le dispositif de commande est configuré pour commander l'agencement de vanne et/ou la pompe de charge pour satisfaire une cible auxiliaire associée à une propriété du flux de réfrigérant fourni à l'échangeur de chaleur ;
dans lequel le dispositif de commande est configuré pour commander à la fois l'agencement de vanne et la pompe de charge pour satisfaire la cible principale et la cible auxiliaire, et facultativement
dans lequel la cible auxiliaire est une température cible du flux de réfrigérant fourni à l'échangeur de chaleur de charge de refroidissement.

11. Système d'échange de chaleur selon l'une quelconque des revendications précédentes, comprenant une branche de refroidissement (110) dans le circuit d'alimentation en parallèle et contournant le dispositif de mélange, la branche de refroidissement comprenant un échangeur de chaleur de charge de refroidissement supplémentaire (102), et facultativement
dans lequel le circuit d'alimentation est configuré de telle sorte qu'il existe un point de branchement (120) pour fournir le flux dans la branche de refroidissement, dans lequel le point de branchement est en amont du dispositif de mélange, et dans lequel un dispositif de restriction de flux se trouve entre le point de branchement et le dispositif de mélange configuré de telle sorte qu'une partie du flux circulant dans le circuit d'alimentation s'écoule à travers la branche de refroidissement de préférence au dispositif de mélange.

12. Procédé de fonctionnement d'un système d'échange de chaleur selon l'une quelconque des revendications précédentes, comprenant :
l'actionnement de la pompe d'alimentation pour faire circuler un réfrigérant à travers l'échangeur de chaleur d'alimentation en réfrigérant et pour fournir le réfrigérant au dispositif de mélange à un débit d'alimentation ;
l'actionnement de la pompe de charge pour faire circuler le réfrigérant à travers l'échangeur de chaleur de charge de refroidissement à un débit de refroidissement ;
la commande de l'agencement de vanne pour faire varier un mélange de (i) réfrigérant provenant du circuit d'alimentation et (ii) réfrigérant remis en circulation à partir du circuit de charge, dans un flux de réfrigérant fourni à l'échangeur de chaleur de charge de refroidissement.

13. Procédé selon la revendication 12, comprenant, en réponse à une augmentation d'une demande de refroidissement au niveau de l'échangeur de chaleur de charge de refroidissement à partir d'un état de fonctionnement de base de l'échangeur de chaleur :
la commande de la pompe de charge pour augmenter un débit du flux de réfrigérant fourni à l'échangeur de chaleur de charge de refroidissement ; et
la commande de l'agencement de vanne pour empêcher une réduction d'une température du flux de réfrigérant fourni à l'échangeur de chaleur de charge de refroidissement et/ou
le procédé comprenant, en réponse à une diminution d'une demande de refroidissement au niveau de l'échangeur de chaleur de charge de refroidissement à partir d'un état de fonctionnement de base de l'échangeur de chaleur :
la commande de la pompe de charge pour réduire un débit du flux de réfrigérant fourni à l'échangeur de chaleur de charge de refroidissement ; et
la commande de l'agencement de vanne pour empêcher une réduction d'une température du flux de réfrigérant fourni à l'échangeur de chaleur de charge de refroidissement.

14. Procédé selon l'une quelconque des revendications 12 et 13, dans lequel le système d'échange de chaleur est conforme à l'une quelconque des revendications 6 et 7, comprenant la commande sélective de l'agencement de vanne pour fonctionner dans :
un mode de dérivation partielle dans lequel le flux de réfrigérant fourni à l'échangeur de chaleur de charge de refroidissement comprend un mélange de (i) réfrigérant provenant du circuit d'alimentation reçu par le biais du dispositif de mélange et (ii) réfrigérant remis en circulation depuis le circuit de charge par le biais de la conduite de dérivation.

15. Procédé selon la revendication 14, dans lequel le système d'échange de chaleur est conforme à la revendication 7, comprenant la commande de l'agencement de vanne dans le mode de dérivation partielle pour faire varier une division du flux reçu depuis l'échangeur de chaleur de charge de refroidissement vers (a) la conduite de dérivation et (b) le dispositif de mélange par le biais de la conduite de retour, pour faire varier une proportion de réfrigérant provenant du circuit d'alimentation dans le flux de réfrigérant fourni à l'échangeur de chaleur de charge de refroidissement et/ou comprenant en outre la commande sélective de l'agencement de vanne pour fonctionner dans :
un mode de retour total dans lequel le flux de réfrigérant fourni à l'échangeur de chaleur de charge de refroidissement consiste en réfrigérant reçu depuis le dispositif de mélange ; et/ou
un mode de dérivation totale dans lequel le flux de réfrigérant fourni à l'échangeur de chaleur de charge de refroidissement consiste en réfrigérant remis en circulation depuis le circuit de charge.
